# EUROPÄISCHE PATENTSCHRIFT

(11) **EP 3 623 214 B1**
(45) Veröffentlichungstag und Bekanntmachung des Hinweises auf die Patenterteilung: **05.05.2021**
(21) Anmeldenummer: 19197001.1
(22) Anmeldetag: 12.09.2019
(51) Int. Cl.: B60P 1/02, B62D 53/06

(54) **NUTZFAHRZEUG MIT ABSENKBAREM LADEBODEN**
COMMERCIAL VEHICLE WITH A LOWERABLE LOADING FLOOR
VÉHICULE UTILITAIRE POURVU DE PLANCHER DE CHARGEMENT POUVANT ÊTRE ABAISSÉ

(30) Priorität: 17.09.2018 DE 102018122718
(43) Veröffentlichungstag der Anmeldung: 18.03.2020
(73) Patentinhaber: Sommer GmbH, 06636 Laucha an der Unstrut (DE)
(72) Erfinder: Tietje, Alexander, 96269 Großheirath (DE)
(74) Vertreter: Weickmann & Weickmann PartmbB

(56) Entgegenhaltungen:
- GB-A- 2 488 210
- US-A- 5 161 814
- US-A1- 2018 126 893
- US-B1- 6 592 139
- US-B1- 8 820 767

## Beschreibung

### I. Anwendungsgebiet

Die Erfindung betrifft Nutzfahrzeuge, insbesondere Anhänger, mit absenkbarem Ladeboden, insbesondere Aufbau.

### II. Technischer Hintergrund

Zum Be- und Entladen eines Nutzfahrzeuges mit schweren Gegenständen, die rein manuell nicht mehr bewegt werden können, sind Ladehilfen wie ein Kran oder ein Hubstapler notwendig, um das Ladegut vom Untergrund auf den Ladeboden des Nutzfahrzeuges, insbesondere eines Anhängers, transferieren zu können oder umgekehrt.

Dabei ist zu unterscheiden, ob der Ladeboden nur kurzfristig für den Be-/ Entladevorgang abgesenkt und insbesondere im abgesenkten Zustand schräg stehend gehalten werden soll oder beispielsweise auf Dauer in einem abgesenktem Zustand sicher stehen soll.

Gerade wenn an der Ladestelle keine solche Ladehilfen verfügbar ist, ist es notwendig, dass das Ladegut beispielsweise über eine schräge Rampe auf den Ladeboden hinaufgefahren werden kann, was entweder eine sehr lange Rampe erfordert oder Schrägstellen des Ladebodens und auch Absenken dessen Hinterkante, um einerseits die Neigung der Auffahrt-Rampe gering zu halten und andererseits nur sehr geringe Abwinklungen zwischen Untergrund und Auffahrtrampe einerseits sowie Auffahrtrampe und Ladeboden andererseits zu bewirken. Denn Fahrzeuge wie etwa ein geschobener oder gezogener Hubstapler, eine sogenannten Ameise, besitzen in der Regel nur wenig Bodenfreiheit.

In diesem Zusammenhang sind selbstfahrende Nutzfahrzeuge, beispielsweise auf Basis des Unimog, bekannt, bei denen die gesamte Ladefläche durch Absenken der Hinterkante bis auf den Untergrund schräg gestellt werden kann, und auch schwere Flurförderfahrzeuge mit Last auf die Ladefläche hinauf und herunter fahren können. Die hierfür vorhandene Mechanik und Hydraulik ist einerseits gewichtsintensiv und minimiert die Nutzlast, andererseits sehr aufwändig und verteuert das Gefährt stark.

Des weiteren sind Fahrzeuge, auch Anhänger, mit Luftfederung an den Rädern bekannt, die durch Ablassen der Luft aus den Luftbälgen abgesenkt werden können, allerdings in der Regel nicht bis nahe am Untergrund, auch bei Schrägstellung durch Absenken nur einer von zwei Achsen.

Es sind weiterhin Schwingen-Achseinheiten bekannt, bei denen die Räder nicht konzentrisch auf dem Achsrohr sitzen, sondern dazu versetzt am freien Ende einer Radschwinge, die im Achsrohr verschwenkbar gelagert ist und mittels in der Regel eines Hydraulikzylinders in ihrer Schwenkstellung verändert werden kann. Durch Anordnen des Achsrohres unter dem meist als Leiterrahmen ausgebildeten Hauptteil des Chassis kann der Ladeboden, der auf dem Leiterrahmen aufliegt, angehoben und abgesenkt werden durch Verschwenken der Radschwingen.

Dabei ist aus Sicherheitsgründen immer eine Verrieglung des Anhängers im fahrfähigen Zustand, also mit angehobenem Ladeboden, notwendig, die vorzugsweise auch nur von befugten Personen gelöst werden kann, also nicht frei zugänglich sein sollte und aus Gründen der Funktionssicherheit nicht der Witterung ausgesetzt sein sollte.

Des weiterem ist es gerade bei Anhängern wie Verkaufsanhängern bekannt, vor allem bei einachsigen oder doppelachsigen Anhängern, für die Zwecke einer stabilen Aufstellung an den Ecken des Anhängers Stützbeine gegen den Untergund auszufahren, damit der Verkaufsanhänger stabil steht und auch keine Schwingungen auf Grund des darin hin- und hergehenden Personals aufbauen kann. Ein Absenken des Ladebodens findet dabei allerdings nicht statt, da hierbei auch nicht das Be- und Entladen im Vordergrund steht.

Die Druckschrift US 5 161 814 A offenbart ein als ein Anhänger ausgebildetes Nutzfahrzeug nach dem Oberbegriff des Anspruchs 1.

Ferner sei auf die Druckschriften US 6 592 139 B1, GB 2 488 219 A und US 2018/126893 A1 hingewiesen.

### III. Darstellung der Erfindung

### a) Technische Aufgabe

Es ist daher die Aufgabe gemäß der Erfindung, ein Nutzfahrzeug, insbesondere einen Anhänger, zur Verfügung zu stellen, welcher einfach und kostengünstig herzustellen ist und einfach und schnell zu bedienen ist, also dessen Ladeboden in eine stabile Lage abzusenken oder hochzufahren ist, wahlweise mit einer Parallelstellung des Ladebodens zum Untergrund oder in einer Schrägstellung dazu.

### b) Lösung der Aufgabe

Diese Aufgabe wird durch die Merkmale der Ansprüche 1 und 14 gelöst. Vorteilhafte Ausführungsformen ergeben sich aus den Unteransprüchen. Hinsichtlich der Vorgehensweise wird diese Aufgabe dadurch gelöst, dass zum Absenken des Ladebodens nur ein einziges, alle Arretiervorrichtungen gleichzeitig lösendes, Betätigungselement betätigt werden muss und anschließend mittels der Hubvorrichtungen der Ladeboden gegenüber den Rädern abgesenkt werden kann. Da die Hubvorrichtungen in aller Regel Hydraulikzylinder umfassen, muss hierfür lediglich der Druck aus den Hydraulikzylindern abgelassen werden.

Zu diesem Zweck befindet sich das Ventil zum Ablassen des Druckes in Griffnähe des Betätigungselementes zum Entriegeln der Arretiervorrichtungen, vorzugsweise vor der Front des Aufbaus des beispielsweise Anhängers, etwa in dem abschließbaren Frontkasten, der sich meist auf der Deichsel montiert vor dem Aufbau befindet.

Dadurch senkt sich der Ladeboden in einer zum Untergrund parallelen Lage gegen diesen ab, bis die vorderen und hinteren Auflageflächen, die sich vor und hinter der einen Achse bzw. der Doppelachse des Chassis befinden, auf dem Untergrund aufsitzen.

Soll der Ladeboden gegenüber dem Untergrund schräg gestellt werden mit dem hinteren Ende tiefer liegend als mit dem vorderen Ende, so wird dies erreicht durch Hochdrücken der Deichsel gegenüber dem Untergrund durch Ausfahren des vorderen Stützrades an der Deichsel, wodurch der Anhänger um den Auflagepunkt der Räder der hintersten vorhandenen Achse hochgeschwenkt wird.

Da das Ziel darin besteht, das hintere Ende des Ladebodens möglichst nah gegen den Untergrund abzusenken, insbesondere bis die heckseitigen Auflageflächen am hinteren Ende des Ladebodens auf dem Untergrund aufliegen, wird dieses Schrägstellen vorzugsweise bei vorher bereits parallel gegen den Untergrund abgesenktem Ladeboden durchgeführt.

Dann wird das Hochdrücken der Deichsel so weit fortgesetzt, bis der Anhänger einerseits auf den Auflageflächen im mittleren Bereich hinter der einen oder den beiden Achsen auf dem Untergrund aufliegt und andererseits die Heck-Auflageflächen den Untergrund erreicht haben.

Im nicht abgesenkten Zustand der Ladefläche ist die beim Stützrad zur Verfügung stehende Ausfahr-Länge nach unten in der Regel nicht ausreichend, damit die heckseitigen Auflageflächen den Untergrund kontaktieren.

Falls die dann verbleibende Höhendifferenz zwischen Oberseite des Ladebodens an dessen hinterer Endkante und dem Untergrund noch zu groß ist, um mit einem Fahrzeug auf den Ladeboden zu fahren, kann dieser Höhenunterschied auch durch eine an die Hinterkante des Ladebodens angesetzte Rampe überbrückt werden.

Dies wird auch gewählt für das Auffahren auf den Ladeboden, wenn dieser parallel gegen den Untergrund abgesenkt wurde und mit seinen Auflageflächen im mittleren Bereich auf dem Untergrund aufsitzt mit parallel dazu liegendem Ladeboden.

Hinsichtlich des Anhängers, insbesondere eines Anhängers mit starr am Chassis befestigter Deichsel, - im Folgenden wird statt allgemein von einem Nutzfahrzeug nur noch von einem Anhänger gesprochen, ohne die Erfindung hierauf zu beschränken - wird diese Aufgabe dadurch gelöst, dass trotz mehrerer vorhandener Verriegelungsvorrichtungen, nämlich Arretiervorrichtungen, für die mehreren vorhandenen Hubvorrichtungen zum Anheben und Absenken der Räder gegenüber dem Ladeboden nur ein einziges Betätigungselement vorhanden ist, durch dessen Betätigung alle Arretiervorrichtungen gleichzeitig in die entriegelte Stellung gebracht werden können für das anschließende Absenken der Räder mittels der Hubvorrichtung.

Denn vorzugsweise besitzt jedes Rad, bei einem Doppelachs-Anhänger also alle vier Räder, jeweils eine eigene Hubvorrichtung und jede der Hubvorrichtungen eine eigene Arretiervorrichtung, die sonst jeweils einzeln entriegelt werden müssten.

Um zu verhindern, dass ein Unbefugter das Betätigungselement betätigt und damit die Arretiervorrichtungen entriegelt - was zu einem Absenken des Ladebodens gegen den Untergrund während des Fahrbetriebes führen könnte - umfasst das Betätigungselement auch eine Verschließvorrichtung, mittels der das Betätigungselement gesichert, insbesondere abgeschlossen, werden kann und nur von befugten Personen betätigt werden kann.

Vorzugsweise befindet sich das Betätigungselement in einem abschließbaren Schließkasten, der beispielsweise auf der Deichsel vor dem Aufbau des Anhängers angeordnet ist und mit einem Schloss gesichert werden kann.

Erfindungsgemäß umfassen die Arretiervorrichtungen einen Arretierbolzen, der am Chassis verlagerbar zwischen einer verriegelnden und einer entriegelten Stellung verlagerbar ist, wobei er in der verriegelnden Stellung in den Bewegungsweg des für das Absenken des Ladebodens sich nach oben bewegenden Rades oder der das Rad tragenden Teile der Achseinheit hineinragt.

Mittels eines Verstellelementes, insbesondere eines rein mechanisch wirkenden Verstellelementes, welches mit dem Betätigungselement wirkverbunden ist, kann der Arretierbolzen in die entriegelte Stellung verbracht werden, was insbesondere gegen eine Vorspannkraft erfolgen muss, welche den Arretierbolzen in die verriegelnde Stellung vorspannt, beispielsweise mit Hilfe einer Zugfeder oder Druckfeder.

Dadurch ergibt sich eine sehr einfacher und langlebiger Arretiervorrichtung, die nur einem geringen Verschleiß unterliegt.

Vorzugsweise ist für jede Seite des Anhängers, also die Räder jeweils einer Seite gemeinsam, ein solches Verstellelement vorhanden. Dabei handelt es sich um eine in Längsrichtung, also der Geradeaus-Fahrtrichtung des Anhängers, verschiebbare, stangenförmige Kulisse, die in dieser Längsrichtung verschiebbar am Chassis, insbesondere dem LeiterRahmen des Chassis, also unterhalb des Aufbaus, geführt ist. Beide Verstellelemente sind mit dem Betätigungselement wirkverbunden, insbesondere indem sie über mindestens eine in Querrichtung zur Längsrichtung verlaufende Koppelstrebe miteinander fest verbunden sind und somit nur synchron in Längsrichtung bewegt werden können.

Vorzugsweise muss das eine oder die beiden Verstellelemente zum Entriegeln der Arretiervorrichtungen nach vorne bewegt werden, weshalb es ausreichend ist, an dem wenigstens einen Verstellelement, insbesondere in der Mitte der Koppelstrebe bei 2 miteinander verbundenen Verstellelementen, ein Zugelement wie ein Seil anzuordnen und an dessen freien Ende einen Handgriff, um das Seil manuell nach vorne zu ziehen, bis sich die Arretierbolzen in der entriegelten Stellung befinden und in dieser gegenüber dem Verstellelement auch verrasten.

Vorzugsweise befindet sich der Handgriff in dem abschließbaren Frontkasten des Anhängers und ist durch dessen Boden unter den Aufbau zu der Koppelstrebe geführt. Das Betätigungselement kann auch mittels eines Motors, beispielsweise eines von der batteriegespeisten Elektromotors, betätigt werden, wobei der Schalter hierfür dann vorzugsweise ebenfalls in dem abschließbaren Frontkasten angeordnet ist.

Der Arretierbolzen ist vorzugsweise in Querrichtung verschiebbar am Chassis gelagert, wobei im nach außen verlagerten, verriegelnden Zustand sein äußeres, vorderes Ende das nach oben bewegen des Rades blockiert, während an seinem inneren, hinteren Ende die Kontaktierung mit dem Verstellelement, insbesondere der Kulisse, erfolgt.

Vorzugsweise ragt am hinteren, inneren Ende des Arretierbolzens ein Querbolzen über dessen Umfang hinaus, vorzugsweise nach unten, und liegt mit seinem Umfang an der zur Längsmitte des Anhängers hin weisenden Leitfläche der stangenförmigen Kulisse an. Durch diese in der Aufsicht betrachtet schräg zu Längsrichtung liegende Leitfläche kann durch nach vorne ziehen der Kulisse der Querbolzen und damit der Arretierbolzen in Richtung Längsmitte, also die senkrecht stehende Längsmittelebene, des Anhängers und damit in die entriegelte Stellung verlagert werden.

Um die Räder einer Achse relativ zum Ladeboden nach oben bewegen zu können, ist die Achse als Schwingen-Achse ausgebildet, indem auf jeder Seite des vorzugsweise in Querrichtung über das Chassis durchgehenden Achsrohres je ein radial vom Achsrohr oder nur einem von 2 beidseitigen Achsstummeln abstrebender Schwingenarm in diesem drehbar um die Querrichtung gelagert ist, und am freien Ende davon jeweils ein Rad drehbar gelagert ist.

Die Hubvorrichtung zum Anheben und Absenken der Räder muss somit ein Verschwenken des Schwingenarmes um den Achskörper bewirken und besteht vorzugsweise in einem in einer senkrechten Längsebene liegenden längenveränderbaren Element, insbesondere einem Hydraulikzylinder, der exzentrisch zur Schwenkachse des Achskörpers entweder direkt an dem Schwingenarm oder einem damit drehfest bezüglich der Schwenkachse verbundenen, in eine andere radiale Richtung abstrebenden Betätigungshebel verbunden ist.

Die vorzugsweise an jeden Rad vorhandenen Hydraulikzylinder werden über eine gemeinsame Pumpe mit Druckmedium versorgt, die manuell über einen Handhebel betätigt werden kann, vorzugsweise jedoch mittels eines Elektromotors betrieben wird, der von einer Batterie gespeist wird.

Vorzugsweise umfasst das Chassis zwei Achsen, die kurz hintereinander in Längsrichtung etwa in der Mitte des Chassis oder dessen unter dem Ladeboden befindlichen Leiterrahmen hintereinander angeordnet sind und eine sogenannte Doppelachse bilden.

Vorzugsweise ist an jeder Achse mindestens ein solches längenveränderbares Element vorhanden, insbesondere sogar an jedem Rad, und ebenso ist jedem Rad eine eigene Arretiervorrichtung zugeordnet.

Die als Verstellelement benutzte stangenförmige Kulisse weist dann vorzugsweise in Längsrichtung hintereinander zwei Leitflächen auf im Abstand der beiden Achsen zueinander, von denen jede mit einem der Arretierbolzen in Verbindung steht. An der über den Aufbau und den darunter befindlichen Leiterrahmen des Chassis steht nach vorne üblicherweise eine fest mit dem Rest des Chassis verbundene Deichsel vor, die ein höhenverstellbares Stützrad zum Abstützen gegenüber dem Untergrund aufweist.

Die Höhenverstell-Vorrichtung des Stützrades gegenüber dem Deichsel besteht üblicherweise aus einer selbsthemmenden Gewindespindel, die in einer Spindelmutter, welche an der Deichsel fixiert ist, mittels einer Handkurbel aufwärts und abwärts bewegt werden kann mit dem Stützrad am unteren Ende der Gewindespindel. Erfindungsgemäß wird die Gewindespindel jedoch mittels eines damit wirkverbundenen elektrischen Spindelmotors betätigt, der seine Energie ebenfalls aus der ohnehin vorhandenen Batterie für die Hubvorrichtung bezieht.

Im abgesenkten Zustand des Ladebodens, also bei demgegenüber seitlich neben dem Ladeboden hochgefahrenen Rädern, sitzt das Chassis auf dem Untergrund auf und besitzt zu diesem Zweck an seiner Unterseite AuflageFlächen, die durch auf der Unterseite des Chassis aufgebrachte Verstärkungsbleche gebildet werden, um dort auftretenden Abrieb vom eigentlichen Chassis abzuhalten.

In der Seitenansicht betrachtet besitzt der unter dem Ladeboden befindliche Teil des Chassis, der insbesondere als so genannter Leiterrahmen ausgebildet ist, einen mittleren Bereich mit einer größeren Höhe, die zum vorderen und hinteren Ende dieses Teils des Chassis abnimmt.

Wird der Ladeboden, der sich in der Regel in einer parallelen Lage zum Untergrund befindet, in dieser Parallellage gegen den Untergrund abgesenkt, so sitzt das in der Seitenansicht die Form eines umgekehrten Trapezes bildende Chassis mit der unten liegenden, kürzeren der beiden parallelen Seiten des Trapezes auf dem Untergrund auf, und in dessen Endbereichen sind - in der Seitenansicht betrachtet - die Verstärkungsbleche als sogenannte mittlere Auflageflächen angeordnet, sei es nur in den in Längsrichtung betrachteten Außenbereichen oder in Querrichtung über die Breite des Chassis durchgehend.

Zusätzlich befinden sich heckseitige Auflageflächen, an denen wiederum Verstärkungsbleche angeordnet sind, unter dem hinteren Ende des Chassis, die auf dem Untergrund aufliegen, wenn der Ladeboden des Anhängers schräg von hinten nach vorne abfallend gestellt wird.

Um einen Höhenunterschied zwischen dem hinteren Ende der Ladekante und dem Untergrund mittels eines Fahrzeuges überwinden zu können, ist am hinteren Ende des Ladebodens eine insbesondere hochklappbare und herabklappbare Rampe befestigt, die sich im hochgeklappt Zustand vorzugsweise noch innerhalb der geschlossenen Hecktüren des Anhängers befindet.

### c) Ausführungsbeispiele

Ausführungsformen gemäß der Erfindung sind im Folgenden beispielhaft näher beschrieben. Es zeigen:
- **Figur 1:**: einen Anhänger mit Doppelachse in perspektivischer Darstellung,
- **Figur 2:**: das Chassis des Anhängers aus Figur 1 in der Seitenansicht in der Fahr-Stellung,
- **Figur 3a:**: eine Ausschnitt-Vergrößerung aus Figur 2,
- **Figur 3b:**: eine Ansicht gemäß Figur 3a, jedoch in der abgesenkten Lade-Stellung des Ladebodens,
- **Figur 4:**: das Chassis des Anhängers in der Aufsicht,
- **Figur 5a:**: eine Ausschnittvergrößerung aus Figur 4 bei verriegelter Achse,
- **Figur 5b:**: eine Ausschnittvergrößerung aus Figur 4 bei entriegelter Achse,
- **Figur 6:**: eine Ansicht geschnitten entlang der Linie VI-VI der Figur 5a.

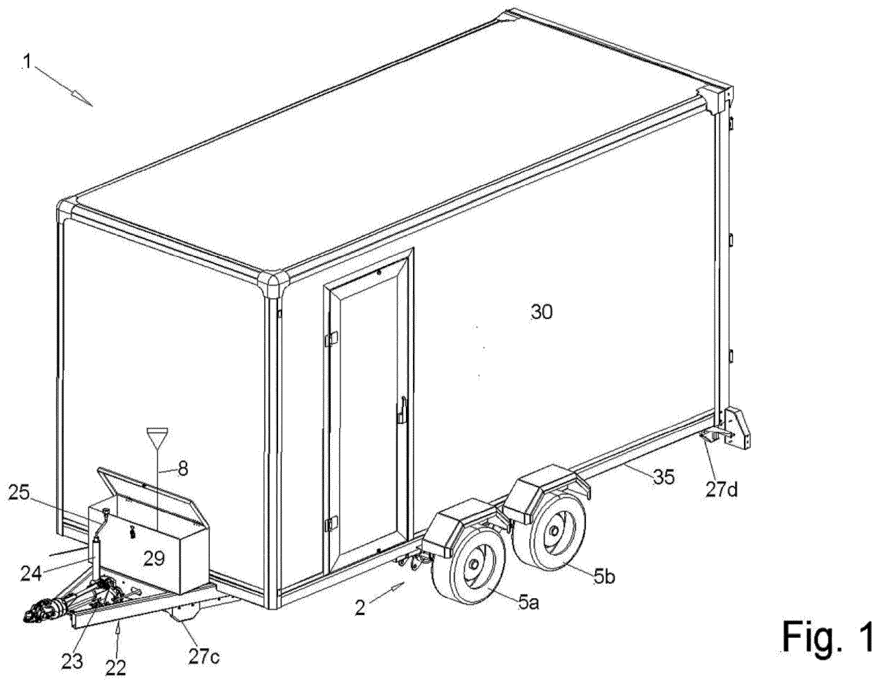

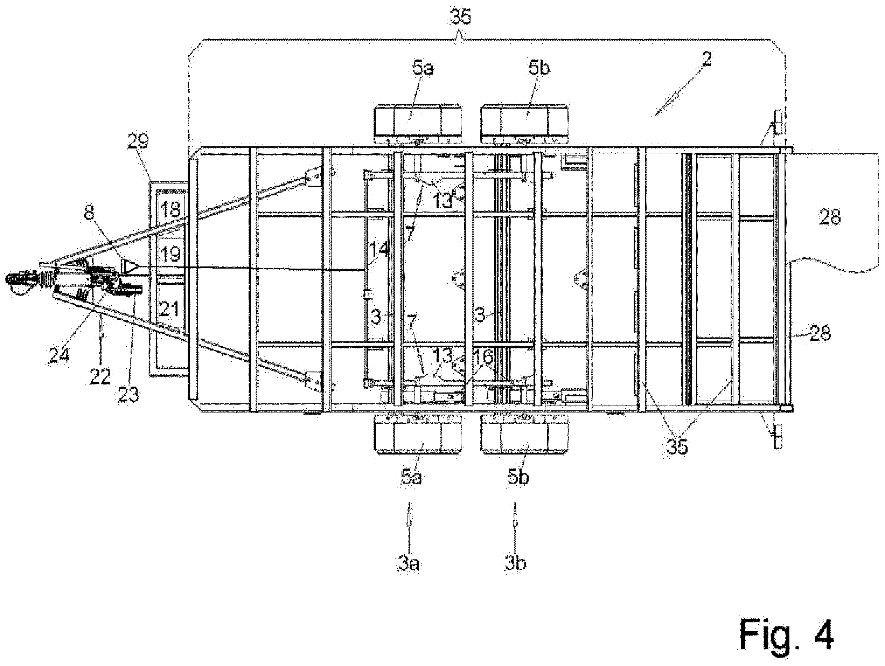

**Figur** 1 zeigt einen handelsüblichen Doppelachs-Anhänger, dessen Chassis 2 - wie in Figur 4 in der Aufsicht zu erkennen - üblicherweise einen üblicherweise in der Aufsicht rechteckigen Hauptrahmen 35 - in aller Regel ausgebildet als Leiterrahmen 35 mit entlang zumindest der Außenseiten angeordneten Längsstreben und diese verbindendenden Querstreben - umfasst, an oder unter dem die beiden Achseinheiten 3a, 3b befestigt, meist verschraubt, sind, sitzt.

Mit diesem Leiterrahmen 35 - auf dem zumindest der meist aus einer durchgehenden, einstückigen Platte bestehende Ladeboden 2, hier ein ganzer kubischer Aufbau 30, der meist aus Aluminium-Kunststoff-Verbundplatten besteht, und einen Ladeboden 2 umfasst, aufgesetzt ist, - ist die Deichsel 22 als Teil des Chassis 2 fest verbunden, meist verschraubt, die über den Leiterrahmen 35 nach vorne vorsteht und am vorderen Ende eine Anhängerkupplung 36 zum Befestigen an der Anhängerkupplung eines Pkw oder Lkw aufweist.

Zwischen der Anhängerkupplung 36 und dem vorderen Ende des Leiterrahmens 35 ist in der Regel eine Stützrad 23 mit einer Höhenverstell-Vorrichtung in Form einer Gewindespindel 24 mit Handkurbel 25 vorhanden, mit der das Stützrad 23 nach unten bis auf den Untergrund 100 ausgefahren werden kann und dadurch die Deichsel 22 und damit den vorderen Bereich des Anhängers 1 gegenüber dem Untergrund 100 abstützt.

Auf der Deichsel 22 ist unmittelbar vor dem vorderen Ende des Aufbaus 30 meist auch ein verschließbarer Frontkasten 29, also ein Schließkasten 29, befestigt, in dem Kleinteile untergebracht werden können, die den Laderaum 20 des Aufbaus 30 nicht reduzieren sollen.

In **Figur 4** ist am hinteren Ende des Leiterrahmens auch eine Rampe 28 dargestellt, die an der Hinterkante des Leiterrahmens 35 oder des Ladebodens 4 schwenkbar befestigt ist zwischen einer nach oben ragenden Fahr-Stellung und einer herabgeklappten Lade-Stellung.

In **Figur 4** sind jedoch auch bereits die erfindungsgemäßen Besonderheiten dargestellt in Form der als Schwingen-Achsen ausgebildeten Achs-Einheiten 3a, b mit der dafür notwendigen Arretiervorrichtung 7, um die Räder 5a, b in der gegenüber dem Ladeboden 4 angehobenen Stellung zu halten, also der Ladestellung, in der der Ladeboden 4 abgesenkt ist in Richtung Untergrund 100.

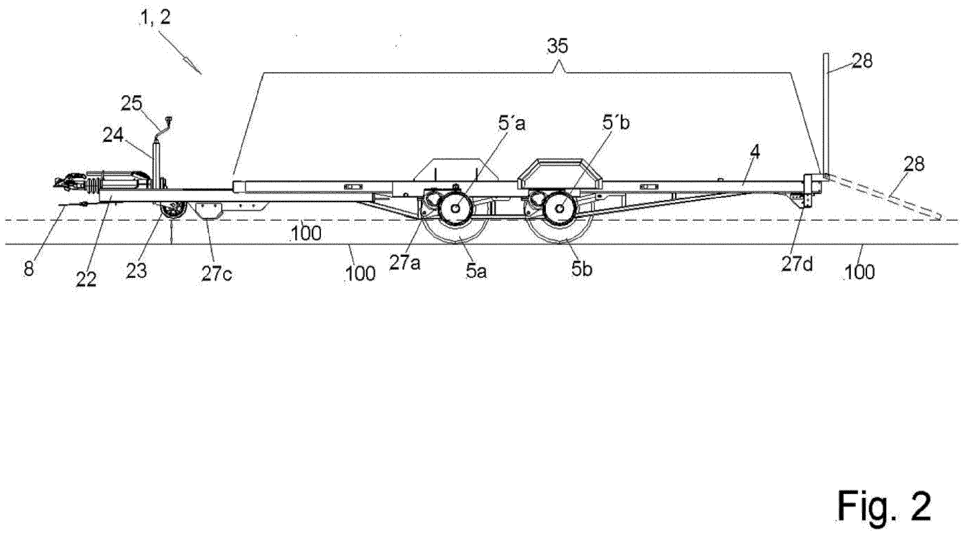

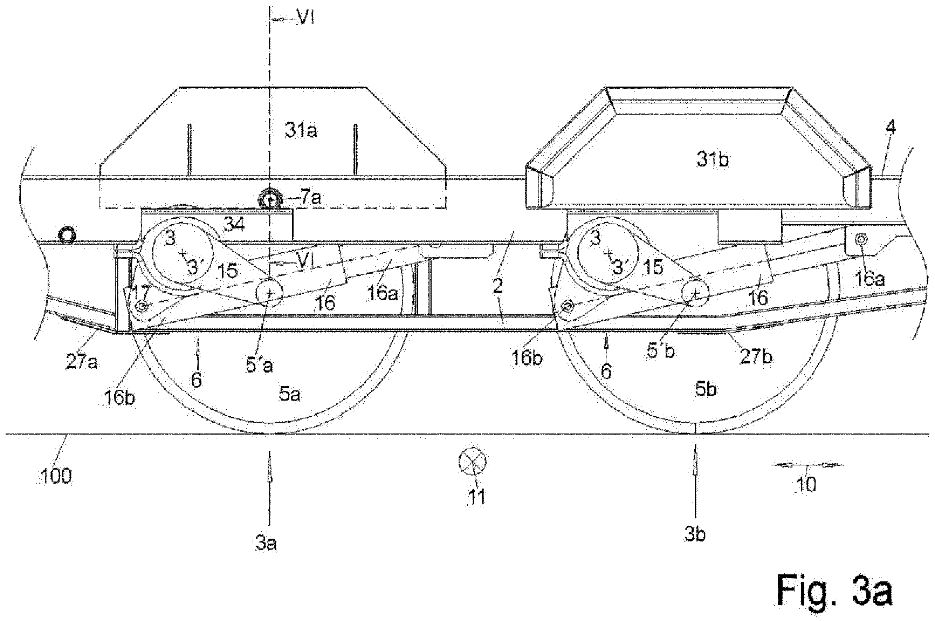

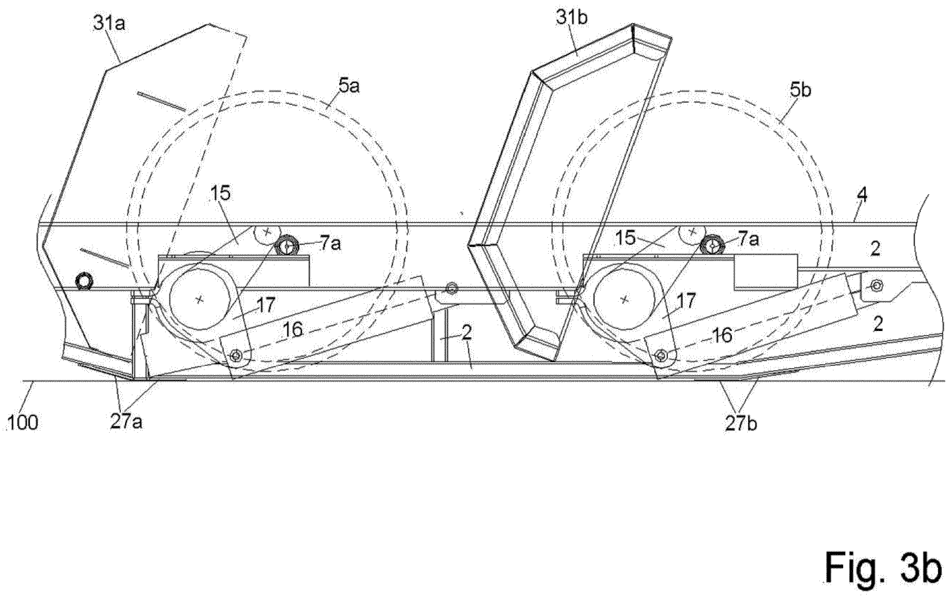

Hierfür zeigt die Seitenansicht der **Figur 2** das gesamte Chassis 2 des Anhängers 1, wobei die als Schwingenachsen ausgebildeten Achseinheiten 3a, b und deren Funktion besser anhand der vergrößerten Darstellungen der **Figuren 3a****,** **b** zu erkennen ist:
Bei jeder der beiden Achseinheiten 3a, b ist - in der Seitenansicht der **Figuren 2****,** **3a****,** **3b** betrachtet -jeweils ein Rad 5a, b drehbar mit seiner Radmitte 5'a, 5'b am freien Ende eines Schwingenarmes 15 angeordnet, welcher mit seinem anderen Ende um die in Querrichtung 11 verlaufende Achs-Mitte 3' des Achsrohres 3 schwenkbar ist.

In eine andere Richtung als der Schwingenarm 15 ragt von der Achs-Mitte 3' ein Betätigungshebel 17 radial ab, der mit dem Schwingenarm 15 drehfest verbunden ist und gemeinsam mit diesem dreht. Im Bereich des Betätigungahebels 17 ist ein Hydraulikzylinder 16 mit seinem Ende 16b befestigt, der mit seinem anderen Ende 16 a am Chassis 2 befestigt ist.

**Figur 3a** zeigt die normale Fahr-Stellung der Achseinheiten 3a, 3b, in der die Räder 5a, 5b nach unten über den Leiterrahmen 35 des Chassis 2 vorstehen und der Anhänger 2 verfahren werden kann.

Werden von dieser Stellung aus die beiden Hydraulikzylinder 16, die bei der Stellung gemäß **Figur 3a** vorzugsweise vollständig ausgefahren sind, eingefahren, insbesondere vollständig eingefahren, so verschwenken dadurch der Betätigungshebel 17 und der Schwingenarm 15 gemeinsam so, dass die in der Seitenansicht betrachteten Rad-Mitten 5'a, 5'b am freien Endbereich des Schwingenarmes 15 nach oben verlagert werden, wie in **Figur 3b** ersichtlich, und zwar so weit, dass die Räder 5a, 5b nicht mehr über die am weitesten nach unten ragenden Bereiche der Unterkante des Chassis 2 vorstehen, also das Chassis 2 auf dem Untergrund 100 aufsitzt.

Wie **Figur** 2 zeigt, besitzt der Leiterrahmen 35 des Chassis 2 im mittleren Bereich eine größere Höhe als im vorderen und hinteren Endbereich, während die Oberseite eben durchgeht, so dass die Unterseite des Hauptrahmens 35 des Chassis 2 zum vorderen und zum hinteren Ende hin jeweils ansteigt.

An den vorderen und hinteren Enden des mittleren Bereiches mit der großen Dicke sind Auflageflächen 27a, b an der Unterseite des Leiterrahmens 35 ausgebildet in Form von Verstärkungsblechen, mit denen das Chassis 2 in diesem abgesenkten Zustand auf dem Untergrund 100 aufsitzt. In dieser Position ragt kein anderes Teil des Anhängers 6 bis zu diesem Auflageflächen 27 a, b nach unten, insbesondere nicht die Hydraulikzylinder 16 höchstens das vordere Stützrad 23, falls es bis auf den Untergrund 100 ausgefahren ist.

Da sowohl der vordere als auch der hintere Hydraulikzylinder 16, und dies auf beiden Seiten, von der gleichen Pumpe 18 mit Hydraulikmedium versorgt werden, kann es sein, dass die Hub- oder Absenkbewegung nicht an allen Rädern 5a, b exakt gleichmäßig zueinander von statten geht, in den Endstellungen, in dem diese Hydraulikzylinder 16 vollständig eingefahren und vollständig ausgefahren sind, befinden sich alle Räder 5a, b jedoch immer auf der gleichen Höhe relativ zum Oberseite des Hauptrahmens 35 oder des Ladebodens 4.

Die in diesem Fall vier Hydraulikzylinder 16 werden mit Hydraulikmedium versorgt von einer Pumpe 18, die sich zusammen mit dem elektrischen Hubmotor 19, der diese Pumpe antreibt, sowie einer die elektrische Energie zur Verfügung stellenden elektrischen Batterie 21 vorzugsweise in dem Frontkasten 29 befindet.

Bei der auf dem Untergrund 100 aufliegenden Stellung gemäß **Figur 3b** befindet sich der Ladeboden 4 parallel zum Untergrund 100, und lediglich in einer Distanz entsprechend der Höhe, also Dicke, des Leiterrahmens 35 des Chassis 2 darüber.

Dies gilt auch für die Hinterkante des Ladebodens 4, von der - wie in **Figur 2** angedeutet - dann immer noch eine auf den Untergrund herabführende Rampe 28 benötigt wird, um vom Untergrund 100 auf den Ladeboden 2 hinaufzufahren. Die zu überwindende Höhe ist dabei allerdings gering, und die Rampe 28 kann bei Nichtbenutzung am hinteren Ende des Ladebodens 2 hochgeklappt und mitgenommenen werden wenn der Anhänger gefahren wird.

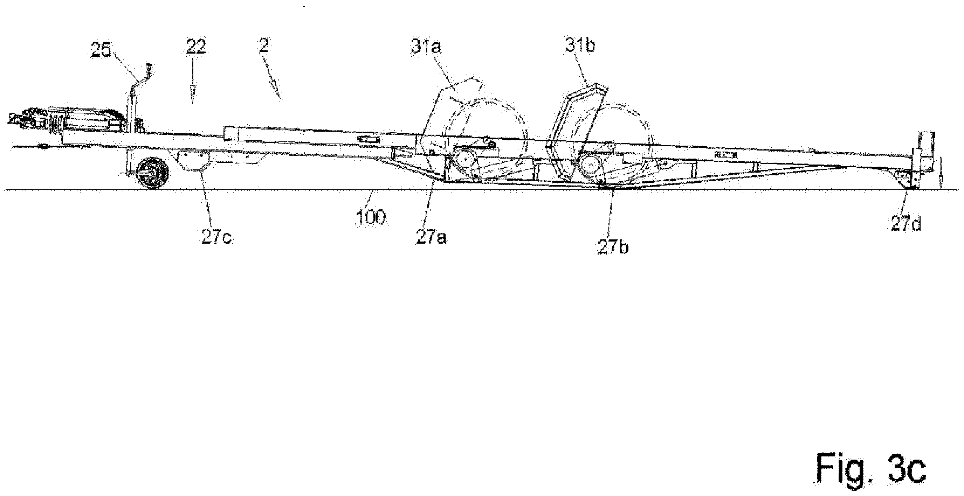

Will man den Abstand zwischen dem der hinteren Endkante des Ladebodens 4 und dem Untergrund 100 weiter verringern, so kann man in diesem gegen den auf dem Untergrund aufgesetztsetzten Zustand des Chassis 2 zusätzlich - wie in **Figur 3c** dargestellt - das Stützrad 23 so weit nach unten ausfahren, bis der Leiterrahmen des Chassis 2 mit seinem hinteren Ende auf dem Untergrund aufsitzt., während die vorderen Auflageflächen 27a vom Untergrund 100 abgehoben sind.

Allerdings erfordert das Hochstemmen des vorderen Bereiches des Anhängers 1 - vor allem im beladenen Zustand - mittels Drehung der Handkurbel 25 einen erheblichen Kraftaufwand, weshalb die Gewindespindel 24 des Stützrades 23 auch mit einem elektrischen Spindelmotor 26 ausgestattet sein kann und gedreht werden kann, der ebenfalls von der Batterie 21 aus mit Strom versorgt werden kann.

Aus diesem Grund erstreckt sich die hinteren Auflageflächen 27b in Form eines Verstärkungsbleches in der Seitenansicht betrachtet nicht nur entlang des hinteren Endes des dicken mittleren Bereiches des Leiterrahmens 35, sondern auch etwas weiter nach hinten entlang der Unterseite der von diesem mittleren Bereich schräg nach hinten oben ansteigenden Schrägstreben, die zum hinteren Ende des Leiterrahmens 35 führen.

Um zu vermeiden, dass der Anhänger 1 aus Versehen in diesem - parallel zum Untergrund gemäß **Figur 3b** oder schräg zum Untergrund 100 gemäß **Figur 3c** - abgesenkten Zustand verfahren wird, indem sich die Räder 5a, b unabsichtlich relativ zum Chassis 2 nach oben bewegen und das Chassis 2 auf dem Untergrund aufsetzt, ist eine Arretiervorrichtung 7 vorhanden, die im aktivierten Zustand den in der nach unten vorstehenden Normalstellung der Räder 5a, b deren unbeabsichtigtes Anheben nach oben unterbindet:

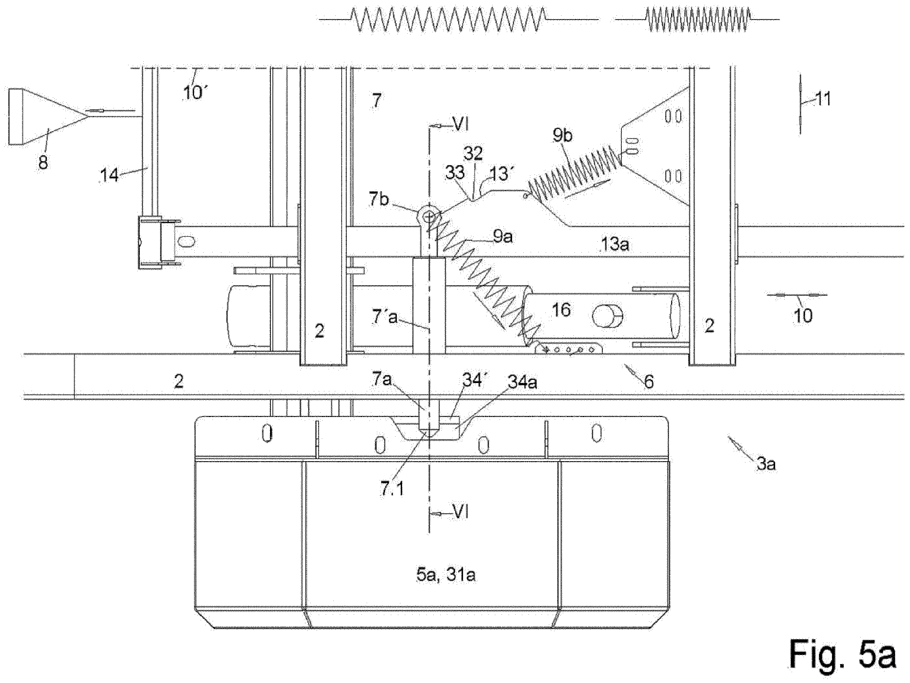

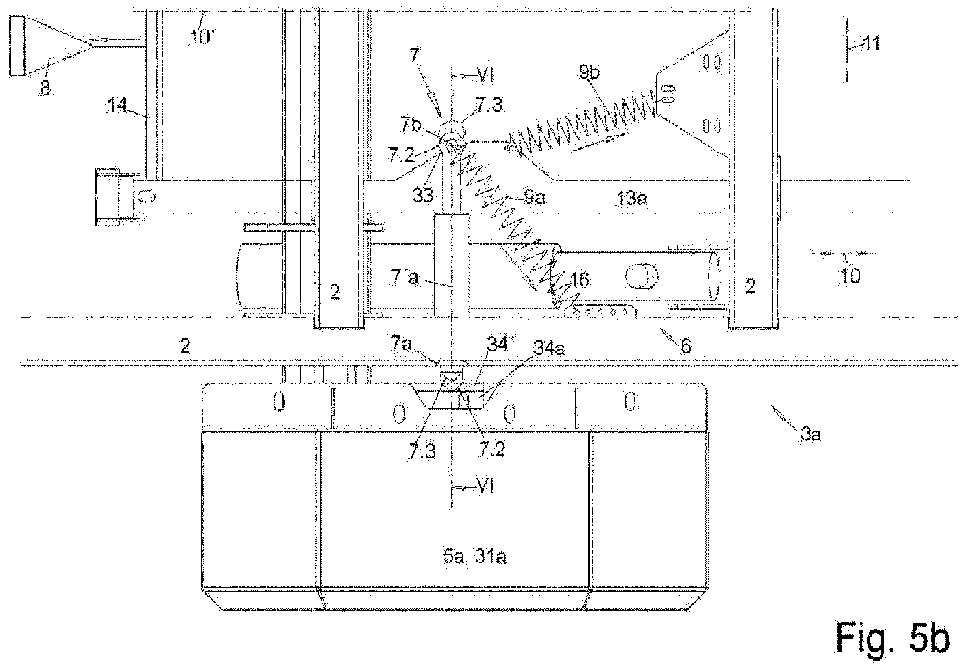

Die Aufsicht der **Figur 5a** zeigt eine der Achseinheiten 3a in der verriegelten Stellung und damit einen Arretierenbolzen 7a in der verriegelnden Position 7.1 und die **Figur 5b** den Arretierenbolzen 7a in der entriegelten Position 7.2, wobei die Rückstell-Position 7.3 ebenfalls angedeutet ist.

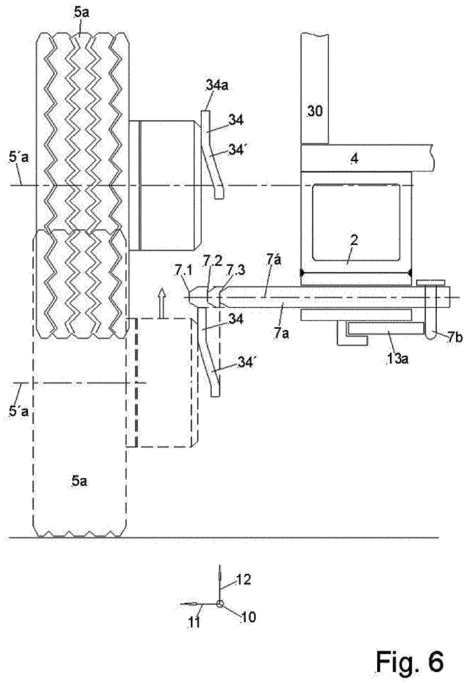

Wie auch in **Figur** 6 ersichtlich, ist der Arretierenbolzen 7a in Querrichtung 11 verschiebbbar in einer am Chassis 2 ausgebildeten Führung. In der nach außen ausgefahrenen verriegelnden Position 7.1 ragt der Arreitierbolzen 7a bei nach unten in die normale Fahrstellung verschwenktem Rad z.B. 5a über den oberen Rand eines Gegenelementes, hier die Oberkante 34a einer etwa aufrecht stehenden Arretierplatte 34, hinweg, die mit der Radnabe oder dem Schwingenarm 15 fest verbunden ist, so dass sich das betreffende Rad 5a in dieser verriegelten Stellung relativ zum Leiterrahmen 35 nicht nach oben bewegen kann.

Da gemäß **Figur 5a****,** **5b** der Arreitierbolzen 7a mittels einer Zugfeder 9a in die verriegelnde Position 7.1, also von der Längsmitte 10' des Anhängers 1 nach außen in Richtung Arretierplatte 34, vorgespannt ist, kann der Arretierbolzen 7a ohne Fremdeinwirkung und aktive Entriegelung diese verriegelnde Position 7.1 nicht verlassen.

Das Entriegeln erfolgt, indem eine stangenförmige Kulisse 13a, die in Längsrichtung 10 geführt am Chassis 2 verschiebbar ist, mittels eines Betätigungselementes 8 so weit nach vorne gezogen wird, dass das mit der Leitfläche 13' der Kulisse 13a zusammenwirkende, zur Längsmitte 10' hin weisende hintere Ende des Arreitierbolzens 7a gegen die Kraft der Zugfeder 9a in Richtung Längsmitte 10' des Anhängers 1 gedrückt wird in die entriegelte Position 7.2, in der sie nicht mehr in den Bewegungweg der der Oberkante 34a Arretierplatte 34 hineinragt.

Zu diesem Zweck ist quer zu dem in Querrichtung 11 beweglichen Arreitierbolzen 7a an dessen hinteren Ende ein Querbolzen 7b befestigt, der nach unten oder oben vorsteht und mit dem Umfang seines vorstehenden freien Endes an der zur Längsmitte 10' hin weisenden Seitenfläche, der Führungsfläche 13', der Kulisse 13a anliegt.

In der Aufsicht der **Figur 5a** betrachtet nähert sich diese Führungsfläche 13' entlang der Kulisse 13 von vorne nach hinten der Längsmitte 10' des Anhängers 1 an, so dass beim Verlagern der Kulisse 13a nach vorne das hintere Ende und damit der gesamte Arretierbolzen 7a zur Längsmitte 10' hin verlagert wird, bis er in einer Rastvertiefung 32 dieser schrägen Führungsfläche 13' einrastet.

Die dann vor dem Querbolzen 7b in Richtung Längsmitte 10' aufragende Rastnase 33 in Form des vorderen Endes der Rastvertiefung 32 verhindert, dass sich die Kulisse 13a wieder nach hinten, also in den Figuren 5a, b nach rechts, zurück bewegt, in die sie mittels einer weiteren Zugfeder 9b vorgespannt ist, die zwischen der Kulisse 13a und dem Chassis 2 angeordnet ist.

In dieser entriegelten Position 7.2 des Arretierenbolzens 7a verbleiben sowohl der Arretierenbolzen 7a als auch die Kulisse 13a, bis der Arretierenbolzen 7a einschließlich des Querbolzens 7b noch weiter in Richtung Längsmitte 10' bewegt wird, und dadurch der Querbolzen 7b außer Eingriff mit der Rastnase 33 der Kulisse 13a gerät, die sich daraufhin mittels der Zugkraft der Zugfeder 9b in die Ausgangslage nach hinten, also in den Figuren nach rechts, zurück bewegt.

Dies wird dadurch erreicht, dass von der entriegelten Position 7.2 des Arretierbolzens 7a aus - wie in **Figur 6** dargestellt - beim nach oben Bewegen des abgesenkten Rades 5a das äußere freie Ende des Arretierbolzens 7a an einer schrägen Leitfläche 34' anliegt, die - in Fahrtrichtung betrachtet - sich vom oberen zu ihrem unteren Ende hin der Längsmitte 10' annähert, und dadurch beim hochheben des Rades 5a in die abgesenkte Stellung des Ladebodens 4 den Querbolzen und damit den ganzen Arretierbolzen 7a so weit Richtung Längsmitte 10' bewegt, dass der Querbolzen 7b außer Eingriff mit der Rastnase 33 gerät und die Zugfeder 9b die Kulisse 13a in die Ausgangsstellung zurück nach hinten zieht.

Wie **Figur 2** zeigt, sind die beiden Kulissen 13a, b über eine Koppelstrebe 14 fest miteinander verbunden, so dass als Betätigungselement 8 z.B. ein Seil von der in Querrichtung betrachteten Mitte der Koppelstrebe 14 angreifen und zum Entriegeln aller Arretiervorrichtungen 7 gleichzeitig nur dieses eine Betätigungselement 8 nach vorne gezogen werden muss.

Damit dies nicht von Unbefugten durchgeführt werden kann, befindet sich das freie Ende des als Betätigungselement 8 dienenden Seiles mit einem dort vorhandenen Handgriff im Inneren des abschließbaren Frontkastens 29.

Wie **Figur 4** zeigt, weist jede der Kulissen 13a, b in Längsrichtung 10 versetzt jeweils zwei Führungsflächen 13' mit Rastvertiefung 32 und Rastnase 33 auf, da an jedem einzelnen Rad 5a, b sowohl eine Hubvorrrichtung 6 mit einem Hydraulikkolbens 16 vorhanden ist als auch eine Arretiervorrichtung 7.

### BEZUGSZEICHENLISTE

- 1: Nutzfahrzeug, Anhänger
- 2: Chassis
- 3a, b: Achseeinheit
- 3: Achse
- 3': Achsmitte, Schwenkachse
- 4: Ladeboden
- 5a, b: Rad
- 5' a, 5' b: Radmitte
- 6: Hubvorrichtung
- 7: Arretiervorrichtung
- 7.1, 7.2: Positionen
- 7a: Arretierbolzen
- 7b: Querbolzen
- 8: Betätigungselement
- 8a: Verschließvorrichtung
- 9a, b: Feder
- 10: Längsrichtung, Geradeaus-Richtung, Fahrtrichtung
- 11: (horizontale) Querrichtung)
- 12: Vertikale
- 13a, b: Verstelllement, Kulisse
- 13': Leitfläche
- 14: Koppelstrebe
- 15: Schwingenarm
- 16: Hydraulikzylinder
- 17: Betätigungshebel
- 18: Pumpe
- 19: Hubmotor
- 20: Laderaum
- 21: Batterie
- 22: Deichsel
- 23: Stützrad
- 24: Höhenverstell-Vorrichtung, Gewindespindel,
- 25: Handkurbel
- 26: Spindelmotor
- 27a, b: Auflagefläche
- 28: Rampe
- 29: Schließkasten, Frontkasten
- 30: Aufbau
- 31a, b: Schutzblech
- 32: Rastvertiefung
- 33: Nase
- 34: Arretierplatte
- 34a: Oberkante
- 34': Leitfläche
- 35: Hauptrahmen, Leiterrahmen

- 100: Untergrund

## Patentansprüche

1. Nutzfahrzeug (1), insbesondere Anhänger (1), mit
- einem Chassis (2), welches umfasst wenigstens eine Achse (3), und einen Ladeboden (4), der mittels einer Hubvorrichtung (6) in der Höhe zu den Rädern (5a, b) der wenigstens einen Achse (3) verlagerbar ist, und
- mehrere Arretiervorrichtungen (7) zum Arretieren der zumindest einen Hubvorrichtung (6) in einer angehobenen Stellung,
- wobei die mehreren Arretiervorrichtungen (7) ein einziges Betätigungselement (8) umfassen, welches mit allen Arretiervorrichtungen (7) wirkverbunden ist, sodass durch dessen Betätigung alle Arretiervorrichtungen (7) gemeinsam entriegelt werden könner und wobei
- die Arretiervorrichtungen (7) einen Arretierbolzen (7a) umfassen, der am Chassis (2) verlagerbar zwischen einer verriegelnden und einer entriegelten Stellung befestigt ist und mittels eines Verstellelementes (13), welches mit dem Betätigungselement (8) wirkverbunden ist, in die entriegelte Stellung bringbar ist
**dadurch gekennzeichnet, dass**
- die mehreren Arretiervorrichtungen (7) für mehrere vorhandene Hubvorrichtungen (6) vorhanden sind, und
- das Verstellelement (13) eine gegenüber dem Chassis (2) verlagerbare, Kulisse (13) ist, an der der Arretierbolzen (7a) so anliegt, dass er durch Verlagern der Kulisse (13) von der verriegelten in die entriegelte Stellung bringbar ist.

2. Nutzfahrzeug. nach Anspruch 1,
**dadurch gekennzeichnet, dass**
das Betätigungselement (8) eine Verschließvorrichtung (8a) gegen unbefugtes Betätigen umfasst.

3. Nutzfahrzeug nach einem der vorhergehenden Ansprüche,
**dadurch gekennzeichnet, dass**
jedes Rad (5a, b) über eine eigene Hubvorrichtung (6) und eine eigene Arretiervorrichtung (7) verfügt.

4. Nutzfahrzeug nach einem der vorhergehenden Ansprüche,
**dadurch gekennzeichnet, dass**
- der Arretierbolzen (7a) in die verriegelte Stellung vorgespannt ist, insbesondere mittels einer Feder (9).

5. Nutzfahrzeug nach einem der vorhergehenden Ansprüche,
**dadurch gekennzeichnet, dass**
die Kulisse (13) gegenüber dem Chassis (2) verschiebbar ist, wobei der Arretierbolzen (7a) so an der Kulisse (13) anliegt, dass er durch Verlagern der Kulisse (13) von der verriegelten in die entriegelte Stellung bringbar ist und gehalten ist.

6. Nutzfahrzeug nach einem der vorhergehenden Ansprüche,
**dadurch gekennzeichnet, dass**
- je ein Verstellelement (13a, b), insbesondere je eine verschiebbare Kulisse (13a, b), auf jeder Seite des Chassis (2) angeordnet ist, welche mit allen Arretierbolzen (7a) dieser Seite des Chassis (2) wirkverbunden ist und
- das Betätigungselement (8) mit beiden Verstellelementen (13a, b) verbunden ist,
- insbesondere indem die beiden Verstellelemente (13a, b) so miteinander verbunden sind, insbesondere über mindestens eine Koppel strebe (14), dass sie nur synchron in Längsrichtung (10) bewegbar sind.

7. Nutzfahrzeug nach einem der vorhergehenden Ansprüche,
**dadurch gekennzeichnet, dass**
- die Achse (3) als Schwingen-Achse (3) ausgebildet ist, indem je ein Rad (5a, b) am freien Ende eines Schwingenarmes (15) befestigt ist, welcher um die Achse (3), insbesondere das freie Ende eines in Querrichtung (11) über das Chassis (2) durchgehenden Achskörpers (3), schwenkbar ist,
- die Hubvorrichtung (6) ein längenveränderbares Element, insbesondere einen Arbeitszylinder (16), insbesondere einen Hydraulikzylinder (16), umfasst, welches mit einem Ende (16a) am Chassis und mit dem anderen Ende (16b) an einem drehfest bezüglich der Achse (3) mit dem Schwingenarm (15) gekoppelten oder mit diesem identischen Betätigungshebel (17) abseits der Achse (13) befestigt ist.

8. Nutzfahrzeug nach Anspruch 7,
**dadurch gekennzeichnet, dass**
- die Hubvorrichtung (6) eine Pumpe (18) zum Versorgen des Hydraulikzylinders (16) mit Hydraulikmedium umfasst sowie einen Hubmotor (19) zum Antreiben der Pumpe (18),
- insbesondere der Hubmotor (19) ein Elektromotor ist und aus einer Batterie (21) mit Strom versorgt wird.

9. Nutzfahrzeug nach einem der vorhergehenden Ansprüche,
**dadurch gekennzeichnet, dass**
- das Chassis (2) zwei Achsen (3a, b) umfasst,
- jede Achse (3a, b) wenigstens ein längenveränderbares Element, insbesondere einen Hydraulikzylinder (16), aufweist,
- insbesondere alle Hydraulikzylinder (16) mit der gleichen Pumpe (18) verbunden sind und von dieser mit Hydraulikmedium versorgt werden.

10. Nutzfahrzeug nach Anspruch 8 oder 9,
**dadurch gekennzeichnet, dass**
- das Nutzfahrzeug (1) ein Anhänger (1) ist und im vorderen Bereich, insbesondere an der Deichsel (22) ein höhenverstellbares Stützrad (23) aufweist,
- die Höhenverstell-Vorrichtung (24) des Stützrades (23) selbsthemmend ausgebildet ist,
- insbesondere indem es sich um eine selbsthemmende Gewindespindel (24) handelt.

11. Nutzfahrzeug nach Anspruch 10,
**dadurch gekennzeichnet, dass**
- bei einem Anhänger (1) das Chassis (2) im vorderen und hinteren Endbereich jeweils beidseits Auflageflächen (27a, b) umfasst zum Absetzen des Chassis (2) auf dem Untergrund (100),
- die so angeordnet sind, dass beim Absetzen des Nutzfahrzeuges auf dem Untergrund (100) nur die Auflageflächen (27a, b) den Untergrund (100) berühren, sofern das Stützrad (23) vom Untergrund (100) abgehoben ist,
und/oder
- die Höhenverstellvorrichtung (24), insbesondere die Gewindespindel (24) mittels einer Handkurbel (25), vorzugsweise jedoch mittels eines Spindelmotors (26) betätigbar ist.

12. Nutzfahrzeug nach einem der vorhergehenden Ansprüche,
**dadurch gekennzeichnet, dass**
am hinteren Ende des Chassis (2), insbesondere des Ladebodens (4) eine aktivierbare und deaktivierbare, insbesondere am hinteren Ende des Ladebodens (4) schwenkbar befestigte, Rampe (28) vorhanden ist.

13. Nutzfahrzeug nach einem der vorhergehenden Ansprüche,
**dadurch gekennzeichnet, dass**
- zumindest das Betätigungselement, insbesondere sofern vorhanden auch die Pumpe und/oder der Hubmotor und/oder der Spindelmotor und/oder die Batterie abschließbar entweder in einem separaten Schließkasten (29) oder im Laderaum (20) abschließbar untergebracht sind,
- der Schließkasten (29) bei einem Anhänger (1) als Frontkasten (29) auf der Deichsel vor dem Ladeboden (2) und dem darauf angeordneten Aufbau (30) angeordnet ist.

14. **Verfahren** zum Betreiben eines Nutzfahrzeuges (1), insbesondere eines Anhängers (1), nach einem der vorhergehenden Ansprüche,
**dadurch gekennzeichnet, dass**
zum Absenken des Ladebodens (2) nur
- das einzige Betätigungselement (8) betätigt wird und
- mittels der Hubvorrichtungen (6) der Ladeboden (2) abgelassen wird, insbesondere der Druck in den Hydraulikzylindern (14) abgesenkt wird.

15. Verfahren nach Anspruch 14,
**dadurch gekennzeichnet, dass**
zum Schrägstellen des Ladebodens (2) mit dem hinteren Ende tiefer liegend als das vordere Ende bei einem Anhänger (1) mit mindestens zwei Achsen (3a, b) das Stützrad (17), insbesondere im abgesenkten Zustand des Ladebodens (2), soweit hochgefahren wird, dass die Radmitten der Räder (5a) aller Achsen (3a) außer der hintersten Achse (3b) nach oben bewegt werden.

## Claims

1. Commercial vehicle (1), in particular trailer (1), having
- a chassis (2) which comprises
- at least one axle (3), and
- a loading floor (4) which can be displaced in height relative to the wheels (5a, b) of the at least one axle (3) by means of a lifting device (6) and
- a plurality of locking devices (7) for locking said at least one lifting device (6) in a raised position,
- wherein the plurality of locking devices (7) comprise a single actuating element (8) which is operatively connected to all locking devices (7) so that all locking devices (7) can be unlocked together by actuation thereof, and wherein
- the locking devices (7) comprise a locking bolt (7a) which is fastened to the chassis (2) in a displaceable manner between a locking position and an unlocked position and can be brought into the unlocked position by means of an adjusting element (13) which is operatively connected to the actuating element (8)
**characterized in that**
- the several locking devices (7) are provided for several existing lifting devices (6), and
- the adjusting element (13) is a connecting member (13) which is displaceable relative to the chassis (2) and against which the locking bolt (7a) bears in such a way that it can be brought from the locked position into the unlocked position by displacement of the connecting member (13).

2. Commercial vehicle according to claim 1,
**characterized in that**
the actuating element (8) comprises a closure device (8a) against unauthorized actuation.

3. Commercial vehicle according to one of the preceding claims,
**characterized in that**
each wheel (5a, b) has its own lifting device (6) and its own locking device (7).

4. Commercial vehicle according to any of the preceding claims,
**characterized in that**
- the locking bolt (7a) is preloaded into the locked position, in particular by means of a spring (9).

5. Commercial vehicle according to one of the preceding claims,
**characterized in that**
the connecting member (13) is displaceable relative to the chassis (2), thereby the locking bolt (7a) bearing against the connecting member (13) in such a way that by displacement of the connecting member (13) it can be brought from the locking position into the unlocked position and held.

6. Commercial vehicle according to one of the preceding claims,
**characterized in that**
- one adjusting element (13a, b) each, in particular one displaceable connecting member (13a, b) each, is arranged on each side of the chassis (2) and is operatively connected to all locking bolts (7a) of this side of the chassis (2) and
- the actuating element (8) is connected to both adjusting elements (13a, b),
- in particular **in that** the two adjusting elements (13a, b) are connected to one another, in particular via at least one coupling strut (14), in such a way that they can be moved only synchronously in the longitudinal direction (10).

7. Commercial vehicle according to one of the preceding claims,
**characterized in that**
- the axle (3) is designed as a rocker axle (3), **in that** in each case one wheel (5a, b) is fastened to the free end of a rocker arm (15) which can be pivoted about the axle (3), in particular the free end of an axle body (3) passing through the chassis (2) in the transverse direction (11),
- the lifting device (6) comprises a length-adjustable element, in particular a working cylinder (16), in particular a hydraulic cylinder (16), which is fastened by one end (16a) to the chassis and by the other end (16b) to an actuating lever (17) coupled in a rotationally fixed manner with respect to the axle (3) to the rocker arm (15) or identical thereto, away from the axle (13).

8. Commercial vehicle according to claim 7,
**characterized in that**
- the lifting device (6) comprises a pump (18) for supplying the hydraulic cylinder (16) with hydraulic medium and a lifting motor (19) for driving the pump (18),
- in particular the lifting motor (19) is an electric motor and is supplied with power from a battery (21).

9. Commercial vehicle according to one of the preceding claims,
**characterized in that**
- the chassis (2) comprises two axles (3a, b),
- each axle (3a, b) has at least one length-adjustable element, in particular a hydraulic cylinder (16),
- in particular all hydraulic cylinders (16) are connected to the same pump (18) and are supplied with hydraulic medium by the latter.

10. Commercial vehicle according to claim 8 or 9,
**characterized in that**
- the commercial vehicle (1) is a trailer (1) and has a height-adjustable support wheel (23) in the front region, in particular on the drawbar (22),
- the height-adjusting device (24) of the support wheel (23) is self-locking,
- in particular it is a self-locking threaded spindle (24).

11. Commercial vehicle according to claim 10,
**characterized in that**
- in the case of a trailer (1), the chassis (2) comprises in the front and rear end region contact surfaces (27a, b) on both sides in each case for setting down the chassis (2) on the ground (100),
- which are arranged in such a way that, when the commercial vehicle is set down on the ground (100), only the contact surfaces (27a, b) are in contact with the ground (100), provided that the support wheel (23) is raised from the ground (100),
and/or
- the height adjustment device (24), in particular the threaded spindle (24), can be actuated by means of a hand crank (25), but preferably by means of a spindle motor (26).

12. Commercial vehicle according to one of the preceding claims, **characterized in that**
at the rear end of the chassis (2), in particular of the loading floor (4), there is a ramp (28) which can be activated and deactivated, in particular which is pivotably fastened to the rear end of the loading floor (4).

13. Commercial vehicle according to one of the preceding claims, **characterized in that**
- at least the actuating element, in particular if present also the pump and/or the lifting motor and/or the spindle motor and/or the battery, are lockably accommodated either in a separate closure box (29) or in the loading compartment (20),
- in the case of a trailer (1), the closure box (29) is arranged as a front box (29) on the drawbar in front of the loading floor (2) and the body (30) arranged thereon.

14. **Method** of operating a commercial vehicle (1), in particular a trailer (1), according to one of the preceding claims,
**characterized in that**
for lowering the loading floor (2) only
- the single actuating element (8) is actuated and
- the loading floor (2) is lowered by means of the lifting devices (6), in particular the pressure in the hydraulic cylinders (14) is lowered.

15. Method according to claim 14,
**characterized in that**
in order to tilt the loading floor (2) with the rear end lying lower than the front end in the case of a trailer (1) with at least two axles (3a, b), the support wheel (17) is raised, in particular in the lowered state of the loading floor (2), to such an extent that the wheel centers of the wheels (5a) of all axles (3a) except the rearmost axle (3b) are moved upwards.

## Revendications

1. Véhicule utilitaire (1), en particulier remorque (1), avec
- un châssis (2) comprenant au moins un arbre (3), et un plancher de chargement (4) qui est déplaçable au moyen d'un dispositif de levage (6) en hauteur par rapport aux roues (5a, b) du au moins un arbre (3), et
- plusieurs dispositifs de verrouillage (7) pour verrouiller ledit au moins un dispositif de levage (6) dans une position levée,
- dans lequel les plusieurs dispositifs de verrouillage (7) comprennent un seul élément d'actionnement (8) qui est connecté de manière opérationnelle à tous les dispositifs de verrouillage (7) de sorte que tous les dispositifs de verrouillage (7) peuvent être déverrouillés ensemble par son actionnement, et dans lequel
- les dispositifs de verrouillage (7) comprennent un boulon de verrouillage (7a) qui est fixé au châssis (2) de manière à pouvoir être déplacé entre une position de verrouillage et une position déverrouillée et qui peut être amené dans la position de déverrouillage au moyen d'un élément de réglage (13) qui est relié de manière opérationnelle à l'élément d'actionnement (8),
**caractérisé en ce que**
- les plusieurs dispositifs de verrouillage (7) sont prévus pour plusieurs dispositifs de levage existants (6), et
- l'élément de réglage (13) est un bloc coulissant (13) qui peut être déplacé par rapport au châssis (2) et contre lequel le boulon de verrouillage (7a) s'appuie de telle sorte qu'il peut être amené de la position verrouillée à la position déverrouillée par le déplacement du bloc coulissant (13).

2. Véhicule utilitaire, selon la revendication 1,
**caractérisé en ce que**
l'élément d'actionnement (8) comprend un dispositif de verrouillage (8a) contre un actionnement non autorisé.

3. Véhicule utilitaire selon l'une des revendications précédentes,
**caractérisé en ce que**
chaque roue (5a, b) comprend son propre dispositif de levage (6) et son propre dispositif de verrouillage (7).

4. Véhicule utilitaire selon l'une des revendications précédentes,
**caractérisé en ce que**
- le boulon de verrouillage (7a) est précontraint dans la position verrouillée, notamment au moyen d'un ressort (9).

5. Véhicule utilitaire selon l'une des revendications précédentes,
**caractérisé en ce que**
le bloc coulissant (13) est déplaçable par rapport au châssis (2), le boulon de verrouillage (7a) s'appuyant sur le bloc coulissant (13) de manière à pouvoir être amené de la position verrouillée à la position déverrouillée et maintenu par un déplacement du bloc coulissant (13).

6. Véhicule utilitaire selon l'une des revendications précédentes,
**caractérisé en ce que**
- un élément de réglage respectif (13a, b), en particulier un bloc coulissant déplaçable respectif (13a, b), est disposé sur chaque côté du châssis (2), qui est relié de manière opérationnelle à tous les boulons de verrouillage (7a) de ce côté du châssis (2), et
- l'élément d'actionnement (8) est relié aux deux éléments de réglage (13a, b),
- en particulier **en ce que** les deux éléments de réglage (13a, b) sont reliés l'un à l'autre, en particulier par l'intermédiaire d'au moins une entretoise d'accouplement (14), de telle sorte qu'ils ne peuvent être déplacés que de manière synchrone dans la direction longitudinale (10).

7. Véhicule utilitaire selon l'une des revendications précédentes,
**caractérisé en ce que**
- l'arbre (3) est conçu comme un arbre oscillant (3), **en ce que** chaque roue (5a, b) est fixée à l'extrémité libre d'un bras oscillant (15) pouvant pivoter autour de l'arbre (3), en particulier l'extrémité libre d'un corps d'arbre (3) traversant le châssis (2) dans la direction transversale (11),
- le dispositif de levage (6) comprend un élément réglable en longueur, en particulier un cylindre de travail (16), en particulier un cylindre hydraulique (16), qui est fixé à distance de l'arbre par une extrémité (16a) au châssis et par l'autre extrémité (16b) à un levier d'actionnement (17) qui est couplé de manière fixe en rotation par rapport à l'arbre (3) au bras oscillant (15) ou est identique à celui-ci.

8. Véhicule utilitaire selon la revendication 7,
**caractérisé en ce que**
- le dispositif de levage (6) comprend une pompe (18) pour alimenter le cylindre hydraulique (16) en fluide hydraulique et un moteur de levage (19) pour entraîner la pompe (18),
- en particulier le moteur de levage (19) est un moteur électrique et est alimenté en énergie par une batterie (21).

9. Véhicule utilitaire selon l'une des revendications précédentes,
**caractérisé en ce que**
- le châssis (2) comprend deux arbres (3a, b),
- chaque arbre (3a, b) comprend au moins un élément réglable en longueur, en particulier un cylindre hydraulique (16),
- en particulier, tous les cylindre hydrauliques (16) sont reliés à la même pompe (18) et sont alimentés en fluide hydraulique par cette dernière.

10. Véhicule utilitaire selon la revendication 8 ou 9,
**caractérisé en ce que**
- le véhicule utilitaire (1) est une remorque (1) et présente une roue d'appui (23) réglable en hauteur dans la région avant, en particulier sur le timon (22),
- le dispositif de réglage en hauteur (24) de la roue d'appui (23) est conçu de manière autobloquante,
- en particulier **en ce qu'**il s'agit d'une broche filetée autobloquante (24).

11. Véhicule utilitaire selon la revendication 10,
**caractérisé en ce que**
- dans le cas d'une remorque (1), le châssis (2) comprend, dans la zone d'extrémité avant et arrière, des surfaces d'appui (27a, b) de part et d'autre respectivement pour la pose du châssis (2) sur le sol (100),
- qui sont disposés de telle sorte que, lorsque le véhicule utilitaire est posé sur le sol (100), seules les surfaces d'appui (27a, b) sont en contact avec le sol (100), à condition que la roue d'appui (23) soit soulevée du sol (100),
et/ou
- le dispositif de réglage en hauteur (24), en particulier la broche filetée (24), peut être actionné au moyen d'une manivelle (25), mais de préférence au moyen d'un moteur de broche (26).

12. Véhicule utilitaire selon l'une des revendications précédentes,
**caractérisé en ce que**
à l'extrémité arrière du châssis (2), notamment du plancher de chargement (4), se trouve une rampe (28) activable et désactivable, notamment fixée de manière pivotante à l'extrémité arrière du plancher de chargement (4).

13. Véhicule utilitaire selon l'une des revendications précédentes,
**caractérisé en ce que**
- au moins l'élément d'actionnement, en particulier, s'il est également présent, la pompe et/ou le moteur de levage et/ou le moteur de broche et/ou la batterie sont logés de manière verrouillable soit dans un coffre séparé (29), soit dans le compartiment de chargement (20) de manière verrouillable,
- dans le cas d'une remorque (1), le coffre de verrouillage (29) est disposée en tant que coffre avant (29) sur le timon devant le plancher de chargement (2) et la carrosserie (30) disposée sur celui-ci.

14. **Procédé** pour l'utilisation d'un véhicule utilitaire (1), notamment d'une remorque (1), selon l'une des revendications précédentes,
**caractérisé en ce que**
pour l'abaissement du plancher de chargement (2) uniquement
- l'élément d'actionnement unique (8) est actionné et
- le plancher de chargement (2) est abaissé au moyen des dispositifs de levage (6), en particulier la pression dans les cylindres hydrauliques (14) est abaissée.

15. Procédé selon la revendication 14,
**caractérisé en ce que,**
pour faire basculer le plancher de chargement (2) avec l'extrémité arrière située plus bas que l'extrémité avant dans le cas d'une remorque (1) avec au moins deux arbres (3a, b), la roue d'appui (17) est relevée, en particulier dans l'état abaissé du plancher de chargement (2), jusqu'à ce que les centres des roues (5a) de tous les arbres (3a), à l'exception de l'arbre le plus en arrière (3b), soient déplacés vers le haut.
